# EUROPEAN PATENT APPLICATION

(11) **EP 4 701 307 A1**
(43) Date of publication of application: **25.02.2026**
(21) Application number: 24802944.9
(22) Date of filing: 07.05.2024
(51) Int. Cl.: H04W 72/23

(54) **COMMUNICATION METHOD AND COMMUNICATION APPARATUS**

(30) Priority: 11.05.2023 CN 202310532571
(71) Applicant: Huawei Technologies Co., Ltd., Shenzhen, Guangdong 518129 (CN)
(72) Inventor: HUA, Meng, Shenzhen, Guangdong 518129 (CN); GAO, Fei, Shenzhen, Guangdong 518129 (CN); DING, Mengying, Shenzhen, Guangdong 518129 (CN)
(74) Representative: Gill Jennings & Every LLP
(86) International application number: PCT/CN2024/091316
(87) International publication number: WO 2024/230662

(57) **Abstract**

This application provides a communication method and a communication apparatus. The method includes: In a scenario of a multi-cell scheduling DCI format, a network device may determine whether a reference cell of the multi-cell scheduling DCI format is a primary cell, and may send the configuration to a terminal device. The terminal device may determine, depending on whether the reference cell of the multi-cell scheduling DCI format is a primary cell, whether to use overbooking processing. According to the method in this application, the network device can flexibly perform overbooking in the scenario of the multi-cell scheduling DCI format, and the terminal device can appropriately use overbooking processing in the scenario of the multi-cell scheduling DCI format.

## Description

This application claims priority to Chinese Patent Application No. 202310532571.9, filed with the China National Intellectual Property Administration on May 11, 2023 and entitled "COMMUNICATION METHOD AND COMMUNICATION APPARATUS", which is incorporated herein by reference in its entirety.

### TECHNICAL FIELD

This application relates to the wireless communication field, and in particular, to a communication method and a communication apparatus.

### BACKGROUND

Currently, during self-scheduling of a primary cell, a network device may perform overbooking (overbooking) on a user equipment-specific search space (user equipment specific search space, USS) of the primary cell. To be specific, a sum of quantities of physical downlink control channel (physical downlink control channel, PDCCH) candidates included in a USS and a common search space (common search space, CSS) that are allocated by the network device to the primary cell or a sum of quantities of non-overlapping control channel elements (control channel element, CCE) included in the USS and the CSS may exceed a corresponding upper limit.

With development of communication technologies, a multi-cell scheduling downlink control information (downlink control information, DCI) format is newly added, and DCI in the format may be used for multi-cell scheduling.

After the multi-cell scheduling DCI format is introduced, how to perform overbooking for a primary cell becomes a problem that urgently needs to be resolved.

### SUMMARY

This application provides a communication method and a communication apparatus, to appropriately use overbooking in a scenario of a multi-cell scheduling DCI format.

According to a first aspect, a communication method is provided. The method may be performed by a terminal device, or may be performed by a module (for example, a processor, a chip, or a chip system) used in a terminal device, or may be implemented by a logical node, a logical module, or software that can implement all or some functions of a terminal device. The method includes: receiving first configuration information, where the first configuration information is used to configure a first user equipment-specific search space USS, the first USS is configured to carry a first downlink control information DCI format, and the first DCI format is a multi-cell scheduling DCI format; and determining, depending on whether blind detection capability counting of the first DCI format is on a primary cell, a quantity of physical downlink control channel PDCCH candidates, in a first time unit in which the first USS is configured, that are allocated to the first USS and that are used for monitoring.

If the first DCI format is the multi-cell scheduling DCI format, the first DCI format may be a DCI format 0_3 or a DCI format 1_3. The first DCI format may be a multi-cell scheduling DCI format corresponding to a first blind detection cell set. The first USS is configured to carry the first DCI format, and may also be referred to as a USS of the first DCI format. This is not limited in this application. A primary scheduling cell of the first DCI format may be the primary cell. The first configuration information may indicate the terminal device to monitor the first DCI format.

A cell in which the blind detection capability counting of the first DCI format is located may also be referred to as a blind detection capability reference cell of the first DCI format or a reference cell of the first DCI format. Whether the blind detection capability counting of the first DCI format is on the primary cell may be understood as whether the blind detection capability reference cell of the first DCI format is the primary cell. The first time unit in which the first USS is configured may represent one time unit in which the first USS is configured. In this application, one time unit in which the first USS is configured, that is, the first time unit, is used as an example for description. The time unit in which the first USS is configured includes at least one first time unit. To be specific, there may be another time unit that is the same as the first time unit. Details are not repeatedly described.

Whether the blind detection capability counting of the first DCI format is on the primary cell may be determined by a network device. The network device in this application may be a device for communicating with the terminal device, and the network device may also be referred to as an access network device or a radio access network device.

The terminal device may determine, based on an indication of the network device, to be specific, an indication that the blind detection capability counting of the first DCI format is on the primary cell or the blind detection capability counting of the first DCI format is not on the primary cell, the quantity of physical downlink control channel PDCCH candidates, in the first time unit in which the first USS is configured, that are allocated to the first USS and that are used for monitoring. The quantity of physical downlink control channel PDCCH candidates, in the first time unit in which the first USS is configured, that are allocated to the first USS and that are used for monitoring may be 0 or greater than 0. This is not limited in this application.

According to the communication method provided in this application, the terminal device may determine, depending on whether the blind detection capability counting of the first DCI format is on the primary cell, the quantity of physical downlink control channel PDCCH candidates, in the first time unit in which the first USS is configured, that are allocated to the first USS and that are used for monitoring, and may determine to allocate different quantities of PDCCH candidates to the first USS in different cases, to facilitate flexible configuration of the first USS.

With reference to the first aspect, in some implementations of the first aspect, determining, depending on whether the blind detection capability counting of the first DCI format is on the primary cell, the quantity of physical downlink control channel PDCCH candidates, in the first time unit in which the first USS is configured, that are allocated to the first USS and that are used for monitoring includes: when the blind detection capability counting of the first DCI format is on the primary cell, determining that the quantity of PDCCH candidates, in the first time unit, that are allocated to the first USS and that are used for monitoring is 0, where in the first time unit, a sum of quantities of PDCCH candidates in all configured search spaces whose blind detection counting is on the primary cell is greater than a blind detection (blind detection, BD) upper-limit, or a sum of quantities of non-overlapping control channel elements CCEs in all configured search spaces whose non-overlapping CCE counting is on the primary cell is greater than a CCE upper-limit.

A cell for the blind detection capability counting of the first DCI format may also be referred to as a blind detection capability reference cell of the first DCI format or a reference cell of the first DCI format. This is not limited in this application. The primary cell is a cell for the blind detection capability counting of the first DCI format, that is, the primary cell is a reference cell. If the primary cell is a reference cell and the primary scheduling cell is the primary cell, BDs and non-overlapping CCEs of the multi-cell scheduling DCI format are counted on the reference cell. Therefore, the BDs and the non-overlapping CCEs of the multi-cell scheduling DCI format are counted on the primary cell.

Blind detection counting or non-overlapping CCE counting of all search spaces configured by the network device is not necessarily performed on the primary cell. In other words, the search spaces configured by the network device include: a search space whose blind detection counting or non-overlapping CCE counting is performed on the primary cell, and a search space whose blind detection counting or non-overlapping CCE counting is not performed on the primary cell. In the first time unit in which the first USS is configured, the sum of the quantities of PDCCH candidates in all the search spaces whose blind detection counting is performed on the primary cell is greater than the BD upper-limit. Alternatively, in the first time unit in which the first USS is configured, the sum of the quantities of non-overlapping CCEs in all the configured search spaces whose non-overlapping CCE counting is on the primary cell is greater than the CCE upper-limit. All the search spaces are search spaces whose blind detection counting or non-overlapping CCE counting is performed on the primary cell. The search space may include a search space in a CSS, or may include a search space in a USS.

In the first time unit in which the first USS is configured, the sum of the quantities of PDCCH candidates in all the configured search spaces whose blind detection counting is on the primary cell is greater than the BD upper-limit, or the sum of the quantities of non-overlapping CCEs in all the configured search spaces whose non-overlapping CCE counting is on the primary cell is greater than the CCE upper-limit. In other words, the network device performs overbooking in the first time unit. This may also be understood as that the network device performs overbooking for the first DCI format on the primary cell.

The network device performs overbooking for the first DCI format on the primary cell, and the terminal device may determine that the quantity of physical downlink control channel PDCCH candidates, in the first time unit in which the first USS is configured, that are allocated to the first USS and that are used for monitoring is 0.

In this implementation, if the primary cell is a cell for the blind detection capability counting of the first DCI format, the network device may perform overbooking for the first DCI format, and the terminal device may perform overbooking processing for the first DCI format. This helps avoid a problem that a quantity of PDCCH candidates or non-overlapping CCEs of a USS in the first time unit is small.

With reference to the first aspect, in some implementations of the first aspect, if the blind detection capability counting of the first DCI format is on the primary cell, in the first time unit in which the first USS is configured, a sum of quantities of PDCCH candidates in a configured CSS whose blind detection counting is on the primary cell and in all configured USSs whose sequence numbers are less than a sequence number of the first USS is less than or equal to the BD upper-limit; or a sum of quantities of non-overlapping CCEs in a configured CSS whose non-overlapping CCE counting is on the primary cell and in all configured USSs whose sequence numbers are less than a sequence number of the first USS is less than or equal to the CCE upper-limit. In addition, in the first time unit in which the first USS is configured, a sum of quantities of PDCCH candidates in the configured CSS whose blind detection counting is on the primary cell and in all configured USSs whose sequence numbers are less than or equal to the sequence number of the first USS is greater than the BD upper-limit; or a sum of quantities of non-overlapping CCEs in the configured CSS whose non-overlapping CCE counting is on the primary cell and in all configured USSs whose sequence numbers are less than or equal to the sequence number of the first USS is greater than the CCE upper-limit.

If a multicast broadcast service (multicast broadcast service, MBS)-related CSS is configured in the first time unit, in the first time unit in which the first USS is configured, a sum of quantities of PDCCH candidates in a configured CSS, other than the MBS-related CSS, whose blind detection counting is on the primary cell and in all the configured USSs whose sequence numbers are less than the sequence number of the first USS or in the MBS-related CSS is less than or equal to the BD upper-limit; or a sum of quantities of non-overlapping CCEs in a configured CSS, other than the MBS-related CSS, whose non-overlapping CCE counting is on the primary cell and in all the configured USSs whose sequence numbers are less than the sequence number of the first USS or in the MBS-related CSS is less than or equal to the CCE upper-limit. In addition, in the first time unit in which the first USS is configured, a sum of quantities of PDCCH candidates in the configured CSS, other than the MBS-related CSS, whose blind detection counting is on the primary cell and in all the configured USSs whose sequence numbers are less than or equal to the sequence number of the first USS or in the MBS-related CSS is greater than the BD upper-limit; or a sum of quantities of non-overlapping CCEs in the configured CSS, other than the MBS-related CSS, whose non-overlapping CCE counting is on the primary cell and in all the configured USSs whose sequence numbers are less than or equal to the sequence number of the first USS or in the MBS-related CSS is greater than the CCE upper-limit.

With reference to the first aspect, in some implementations of the first aspect, determining, depending on whether the blind detection capability counting of the first DCI format is on the primary cell, the quantity of physical downlink control channel PDCCH candidates, in the first time unit in which the first USS is configured, that are allocated to the first USS and that are used for monitoring includes: when the blind detection capability counting of the first DCI format is on a cell other than the primary cell, determining that the quantity of PDCCH candidates, in the first time unit, that are allocated to the first USS and that are used for monitoring is greater than 0.

With reference to the first aspect, in some implementations of the first aspect, the primary cell is a cell for blind detection capability counting of a maximum of K scheduled cell sets of the first DCI format, and K is equal to 1 or 2. The scheduled cell set is a scheduled cell set of the first DCI format, and the first DCI format may be configured with one or more scheduled cell sets.

The primary cell is the primary scheduling cell, and the primary cell is a reference cell. The primary cell may be a reference cell in a maximum of one or two scheduled cell sets. In other words, there is at least one scheduled cell set in which a reference cell is not the primary cell. This helps reduce complexity of overbooking processing of the terminal device, and can alleviate a limited blind detection capability on the primary cell.

With reference to the first aspect, in some implementations of the first aspect, if the primary cell is not configured with a USS carrying a second DCI format used for self-scheduling, the primary cell is a cell for blind detection capability counting of a maximum of M scheduled cell sets of the first DCI format, and the second DCI format is a single-cell scheduling DCI format; or if the primary cell is configured with a USS carrying a second DCI format used for self-scheduling, the primary cell is a cell for blind detection capability counting of a maximum of N scheduled cell sets of the first DCI format, where M is greater than N, or M=N+1.

Specific values of M and N may be preset in a protocol. This is not limited in this application.

That the primary cell is not configured with a USS carrying the second DCI format used for self-scheduling may be referred to as that the primary cell is not configured with a self-scheduling USS. That the primary cell is configured with a USS carrying the second DCI format used for self-scheduling may be referred to as that the primary cell is configured with a self-scheduling USS.

The primary cell is the primary scheduling cell, and the primary cell is a reference cell. Compared with a scenario in which the primary cell is not configured with a self-scheduling USS, in a scenario in which the primary cell is configured with a self-scheduling USS, the primary cell may be a reference cell in more scheduled cell sets. In other words, if the primary cell is configured with a self-scheduling USS, complexity of overbooking processing of the terminal device is increased. Therefore, in this scenario, cases in which the primary cell is a reference cell in a scheduled cell set are reduced. This helps reduce complexity of overbooking processing of the terminal device.

With reference to the first aspect, in some implementations of the first aspect, the first time unit is a slot or a time span.

According to a second aspect, a communication method is provided. The method may be performed by a network device, or may be performed by a module (for example, a processor, a chip, or a chip system) used in a network device, or may be implemented by a logical node, a logical module, or software that can implement all or some functions of a network device. The method includes: determining that a primary cell is a cell for blind detection capability counting of a first downlink control information DCI format, where the first DCI format is a multi-cell scheduling DCI format; and sending first configuration information, where the first configuration information is used to configure a first user equipment-specific search space USS, and the first USS is configured to carry the first DCI format. In a first time unit in which the first USS is configured, a sum of quantities of PDCCH candidates in all configured search spaces whose blind detection counting is on the primary cell is greater than a BD upper-limit, or a sum of quantities of non-overlapping CCEs in all configured search spaces whose non-overlapping CCE counting is on the primary cell is greater than a CCE upper-limit.

The primary cell is a cell for the blind detection capability counting of the first DCI format. In other words, in the multi-cell scheduling DCI format, the primary cell is a reference cell. BDs and non-overlapping CCEs of the first DCI format are counted on the reference cell. Therefore, the BDs and the non-overlapping CCEs of the first DCI format are counted on the primary cell. The primary cell is configured with a CSS. If a sum of quantities of PDCCH candidates in the CSS and a USS is less than or equal to the BD upper-limit, a quantity of PDCCH candidates is small; or if a sum of quantities of non-overlapping CCEs in the CSS and a USS is less than or equal to the CCE upper-limit, a quantity of non-overlapping CCEs is small. Therefore, the network device may perform overbooking. To be specific, in the first time unit in which the first USS is configured, the sum of the quantities of PDCCH candidates in all the configured search spaces whose blind detection counting is on the primary cell is greater than the BD upper-limit, or the sum of the quantities of non-overlapping CCEs in all the configured search spaces whose non-overlapping CCE counting is on the primary cell is greater than the CCE upper-limit.

According to the communication method provided in this application, the network device may perform overbooking when the primary cell is a cell for the blind detection capability counting of the first downlink control information DCI format. This helps avoid a problem that a quantity of PDCCH candidates or non-overlapping CCEs of a USS in the first time unit is small.

With reference to the second aspect, in some implementations of the second aspect, the primary cell is a cell for blind detection capability counting of a maximum of K scheduled cell sets of the first DCI format, and K is equal to 1 or 2.

The primary cell is a primary scheduling cell, and the primary cell is a reference cell. The primary cell may be a reference cell in a maximum of one or two scheduled cell sets. In other words, there is at least one scheduled cell set in which a reference cell is not the primary cell. This helps reduce complexity of overbooking of the network device, and can alleviate a limited blind detection capability on the primary cell.

With reference to the second aspect, in some implementations of the second aspect, if the primary cell is not configured with a USS carrying a second DCI format used for self-scheduling, the primary cell is a cell for blind detection capability counting of a maximum of M scheduled cell sets of the first DCI format, and the second DCI format is a single-cell scheduling DCI format; or if the primary cell is configured with a USS carrying a second DCI format used for self-scheduling, the primary cell is a cell for blind detection capability counting of a maximum of N scheduled cell sets of the first DCI format, where M is greater than N, or M=N+1.

That the primary cell is not configured with a USS carrying the second DCI format used for self-scheduling may be referred to as that the primary cell is not configured with a self-scheduling USS. That the primary cell is configured with a USS carrying the second DCI format used for self-scheduling may be referred to as that the primary cell is configured with a self-scheduling USS.

The primary cell is the primary scheduling cell, and the primary cell is a reference cell. Compared with a scenario in which the primary cell is not configured with a self-scheduling USS, in a scenario in which the primary cell is configured with a self-scheduling USS, the primary cell may be a reference cell in more scheduled cell sets. In other words, if the primary cell is configured with a self-scheduling USS, complexity of overbooking of the network device is increased. Therefore, in this scenario, cases in which the primary cell is a reference cell in a scheduled cell set are reduced. This helps reduce complexity of overbooking of the network device.

With reference to the second aspect, in some implementations of the second aspect, the first time unit is a slot or a time span.

According to a third aspect, a communication apparatus is provided. The communication apparatus may be a terminal device, a module (for example, a processor, a chip, or a chip system) used in a terminal device, or a logical node, a logical module, or software that can implement all or some functions of a terminal device. The communication apparatus includes an interface module and a processing module. The interface module is configured to receive first configuration information, where the first configuration information is used to configure a first user equipment-specific search space USS, the first USS is configured to carry a first downlink control information DCI format, and the first DCI format is a multi-cell scheduling DCI format. The processing module is configured to determine, depending on whether blind detection capability counting of the first DCI format is on a primary cell, a quantity of physical downlink control channel PDCCH candidates, in a first time unit in which the first USS is configured, that are allocated to the first USS and that are used for monitoring.

With reference to the third aspect, in some implementations of the third aspect, the processing module is further configured to: when the blind detection capability counting of the first DCI format is on the primary cell, determine that the quantity of PDCCH candidates, in the first time unit, that are allocated to the first USS and that are used for monitoring is 0, where in the first time unit, a sum of quantities of PDCCH candidates in all configured search spaces whose blind detection counting is on the primary cell is greater than a BD upper-limit, or a sum of quantities of non-overlapping control channel elements CCEs in all configured search spaces whose non-overlapping CCE counting is on the primary cell is greater than a CCE upper-limit.

With reference to the third aspect, in some implementations of the third aspect, the processing module is further configured to: when the blind detection capability counting of the first DCI format is on a cell other than the primary cell, determine that the quantity of PDCCH candidates, in the first time unit, that are allocated to the first USS and that are used for monitoring is greater than 0.

With reference to the third aspect, in some implementations of the third aspect, the primary cell is a cell for blind detection capability counting of a maximum of K scheduled cell sets of the first DCI format, and K is equal to 1 or 2.

With reference to the third aspect, in some implementations of the third aspect, if the primary cell is not configured with a USS carrying a second DCI format used for self-scheduling, the primary cell is a cell for blind detection capability counting of a maximum of M scheduled cell sets of the first DCI format, and the second DCI format is a single-cell scheduling DCI format; or if the primary cell is configured with a USS carrying a second DCI format used for self-scheduling, the primary cell is a cell for blind detection capability counting of a maximum of N scheduled cell sets of the first DCI format, where M is greater than N, or M=N+1.

With reference to the third aspect, in some implementations of the third aspect, the first time unit is a slot or a time span.

According to a fourth aspect, a communication apparatus is provided. The communication apparatus may be a network device, a module (for example, a processor, a chip, or a chip system) used in a network device, or a logical node, a logical module, or software that can implement all or some functions of a network device. The communication apparatus includes a processing module and an interface module. The processing module is configured to determine that a primary cell is a cell for blind detection capability counting of a first downlink control information DCI format, where the first DCI format is a multi-cell scheduling DCI format. The interface module is configured to send first configuration information, where the first configuration information is used to configure a first user equipment-specific search space USS, and the first USS is configured to carry the first DCI format. In a first time unit in which the first USS is configured, a sum of quantities of PDCCH candidates in all configured search spaces whose blind detection counting is on the primary cell is greater than a BD upper-limit, or a sum of quantities of non-overlapping CCEs in all configured search spaces whose non-overlapping CCE counting is on the primary cell is greater than a CCE upper-limit.

With reference to the fourth aspect, in some implementations of the fourth aspect, the primary cell is a cell for blind detection capability counting of a maximum of K scheduled cell sets of the first DCI format, and K is equal to 1 or 2.

With reference to the fourth aspect, in some implementations of the fourth aspect, if the primary cell is not configured with a USS carrying a second DCI format used for self-scheduling, the primary cell is a cell for blind detection capability counting of a maximum of M scheduled cell sets of the first DCI format, and the second DCI format is a single-cell scheduling DCI format; or if the primary cell is configured with a USS for carrying self-scheduling, the primary cell is a cell for blind detection capability counting of a maximum of N scheduled cell sets of the first DCI format, where M is greater than N, or M=N+1.

With reference to the fourth aspect, in some implementations of the fourth aspect, the first time unit is a slot or a time span.

According to a fifth aspect, a communication apparatus is provided, and includes a processor. The processor is configured to perform the method according to any one of the foregoing aspects or the possible implementations of the foregoing aspects.

The communication apparatus may further include a memory, configured to store instructions and data. The memory is coupled to the processor. When the processor executes the instructions stored in the memory, the method described in the foregoing aspects may be implemented. The communication apparatus may further include a communication interface. The communication interface is used by the communication apparatus to communicate with another device. For example, the communication interface may be a transceiver, a circuit, a bus, a module, or another type of communication interface.

According to a sixth aspect, a communication system is provided, and includes the communication apparatus according to the third aspect and the communication apparatus according to the fourth aspect.

According to a seventh aspect, a communication apparatus is provided, and includes a processor. The processor is coupled to a memory, and the memory is configured to store instructions. When the processor invokes the instructions, the communication apparatus is enabled to perform the method according to any one of the possible implementations of any one of the foregoing aspects.

According to an eighth aspect, a chip system is provided, and includes a processor, configured to invoke instructions from a memory and run the instructions, to enable the chip system to perform the method according to any one of the possible implementations of any one of the foregoing aspects.

According to a ninth aspect, a computer-readable storage medium is provided. The computer-readable storage medium stores a computer program (which may also be referred to as code or instructions). When the computer program is run on a computer, the computer is enabled to perform the method according to any one of the possible implementations of any one of the foregoing aspects.

According to a tenth aspect, a computer program product is provided. The computer program product includes a computer program (which may also be referred to as code or instructions). When the computer program is run, a computer is enabled to perform the method according to any one of the possible implementations of any one of the foregoing aspects.

### BRIEF DESCRIPTION OF DRAWINGS

FIG. 1 is a diagram of different configurations of a search space set;
FIG. 2 is a diagram of a mobile communication system to which embodiments of this application are applicable;
FIG. 3 is a schematic flowchart of a communication method according to an embodiment of this application;
FIG. 4 is a schematic flowchart of another communication method according to an embodiment of this application;
FIG. 5 is a block diagram of a communication apparatus according to an embodiment of this application; and
FIG. 6 is a block diagram of another communication apparatus according to an embodiment of this application.

### DESCRIPTION OF EMBODIMENTS

The following describes technical solutions of this application with reference to the accompanying drawings.

For ease of understanding embodiments of this application, professional terms in embodiments of this application are first described.

### 1. Subcarrier spacing and resource block

In new radio (new radio, NR), a plurality of subcarrier spacings (subcarrier spacing, SCS) are defined. An SCS corresponding to an SCS sequence number *µ* is 2*^{µ}·*15 kilohertz (kilohertz, kHz). For example, SCSs whose sequence numbers *µ* range from 0 to 4 correspond to 15 kHz, 30 kHz, 60 kHz, 120 kHz, and 240 kHz respectively.

In the NR, a resource block (resource block, RB) is defined as 12 consecutive subcarriers in frequency domain.

### 2. Carrier and cell

A carrier (carrier) is a radio signal, namely, an electromagnetic wave, that is transmitted by a radio frequency device included in a network device or a terminal device and that has a specific frequency, bandwidth, or standard, and is used for carrying information in wireless mobile communication. A carrier used by the network device for sending is referred to as a downlink carrier, and a carrier used by the terminal device for sending is referred to as an uplink carrier.

A cell (cell) is described from a perspective of resource management or mobility management at a higher layer (for example, a protocol layer above a physical layer, like a radio resource control layer or a medium access control layer). A coverage area of each network device may be divided into one or more cells.

In a current NR standard, one downlink carrier may be configured for one cell. Optionally, one uplink carrier or two uplink carriers may be further configured for one cell. For the terminal device, a cell that provides a service for the terminal device may be referred to as a serving cell. A cell in this application may alternatively be a serving cell.

### 3. Self-scheduling and cross-carrier scheduling

Self-scheduling means that data of a cell is scheduled by a PDCCH on the cell.

Cross-carrier scheduling means that data of a cell is scheduled by a PDCCH on another cell. In the cross-carrier scheduling, a cell carrying a PDCCH is referred to as a primary scheduling cell or a scheduling cell (scheduling cell), and a cell carrying data is referred to as a scheduled cell (scheduled cell).

In the cross-carrier scheduling, a primary cell may be the scheduling cell or the scheduled cell. To be specific, the primary cell may schedule a secondary cell across carriers, or may be scheduled by a secondary cell across carriers.

### 4. Primary cell and secondary cell

In dual connectivity (dual connectivity, DC), a terminal device may establish connections to a plurality of cells. The plurality of cells may be divided into two groups. One group is a master cell group (master cell group, MCG), and the other group is a secondary cell group (secondary cell group, SCG).

A primary cell in the MCG is a primary cell (primary cell, PCell), a primary cell in the SCG is a primary secondary cell (primary secondary cell, PSCell), and other cells in the MCG and the SCG are secondary cells (secondary cell, SCell).

The PCell in the MCG and an SCell in the MCG may be combined by using a carrier aggregation (carrier aggregation, CA) technology. The PSCell in the SCG and an SCell in the SCG may also be combined by using the CA technology.

In a non-DC case, a cell that establishes a connection to the terminal device is an MCG.

A cell in embodiments of this application is described from a perspective of resource management or mobility management at a higher layer (for example, a protocol layer above a physical layer, like a radio resource control layer or a medium access control layer). A coverage area of each network device may be divided into one or more cells. It should be understood that the cell is a common name. The cell in embodiments of this application may alternatively be a serving cell, to be specific, a cell that provides a service for the terminal device.

### 5. Search space set

One PDCCH in NR may be carried in L={1, 2, 4, 8, 16} CCEs. Herein, L is referred to as an aggregation level (aggregation level, AL) of the PDCCH. One CCE includes six resource element groups (resource element group, REG), and each REG corresponds to one RB on one OFDM symbol.

One PDCCH candidate (PDCCH candidate) may include L={1, 2, 4, 8, 16} control channel elements. On the L control channel elements, one PDCCH may be sent, or no PDCCH may be sent. A terminal device may monitor a PDCCH candidate, to determine whether there is a PDCCH of the terminal device.

One search space (search space) includes a group of PDCCH candidates. The search space is sometimes referred to as a search space set (search space set). There are two types of search space sets: a CSS and a USS.

A Type0-PDCCH CSS set, a Type0A-PDCCH CSS set, a Type1-PDCCH CSS set, and a Type2-PDCCH CSS set are configured only on the primary cell, and a Type3-PDCCH CSS set and the USS may be configured on the primary cell or a secondary cell.

### 6. Carrier aggregation and cross-carrier scheduling

To implement high-speed transmission, there is a CA mechanism in NR. A terminal device that supports CA may simultaneously perform data transmission on a plurality of carriers, to increase a data transmission rate. Each carrier in CA is also referred to as a component carrier (component carrier, CC).

A cell on which a PDCCH corresponding to a data channel can be sent is referred to as a scheduling cell (scheduling cell), also referred to as a primary scheduling cell. A cell on which transmission is performed through the data channel is referred to as a scheduled cell (scheduled cell). UE receives the PDCCH on the primary scheduling cell, and sends or receives data on the scheduled cell based on control information carried in the PDCCH.

A downlink carrier of a cell carries a control channel, to perform uplink and downlink data channel scheduling of the cell. The cell is a self-scheduling (self-scheduling) cell. The cell is both a scheduling cell and a scheduled cell.

Among a plurality of cells of CA, a downlink carrier of a cell carries a control channel, and the cell may schedule uplink and downlink data channels of another cell. Herein, the cell carrying the control channel is referred to as a scheduling cell, and the cell carrying the uplink and downlink data channels is referred to as a scheduled cell. This scheduling mode is referred to as cross-carrier scheduling (cross-carrier scheduling, CCS). One scheduling cell may correspond to a plurality of scheduled cells. To be specific, a control channel may be sent on one scheduling cell to perform data scheduling for a plurality of scheduled cells.

In the cross-carrier scheduling, associated search space configuration is performed on the primary scheduling cell and the scheduled cell. To be specific, one or more search spaces are configured on the scheduled cell, and a search space that is configured on the primary scheduling cell and that has a same sequence number as a sequence number of the one or more search spaces is used to schedule the search space of the scheduled cell.

### 7. Blind detection upper-limit or CCE upper-limit

Two tasks in PDCCH detection have great impact on implementation complexity of a terminal device: a quantity of monitored PDCCH candidates, sometimes referred to as a quantity of BDs; and a quantity of non-overlapping CCEs, sometimes referred to as a quantity of CCEs. A larger quantity of monitored PDCCH candidates indicates higher decoding complexity of the terminal device, and a larger quantity of non-overlapping CCEs indicates higher channel estimation complexity of the terminal device.

For each scheduled cell, a blind detection upper-limit and a non-overlapping CCE upper-limit of a PDCCH candidate in a time unit of a primary scheduling cell used to schedule the scheduled cell may be determined according to a stipulation in a protocol, and are referred to as a BD upper-limit and a CCE upper-limit. The time unit may be several consecutive orthogonal frequency division multiplexing (orthogonal frequency division multiplexing, OFDM) symbols. Specifically, the time unit may be a slot (slot) or a time span (span). This is not limited in embodiments of this application.

### 8. Overbooking (overbooking)

As described above, the Type0-PDCCH CSS set, the Type0A-PDCCH CSS set, the Type1-PDCCH CSS set, and the Type2-PDCCH CSS set are configured only on a primary cell. PDCCH candidates in these CSSs may be used to send important messages such as broadcast information, and these CSSs are important. In addition, due to a requirement of a broadcast channel, a periodicity of the CSS may be long.

A quantity of PDCCH candidates in the CSS does not exceed a BD upper-limit, and a network device may further configure a USS for the primary cell. There are a plurality of possible implementations in which the network device configures the USS for the primary cell.

In a possible implementation, to ensure that the USS has a PDCCH candidate in each slot and has a same scheduling opportunity in each slot, the network device may set a periodicity of the USS to 1 slot, and quantities of PDCCH candidates of the USS in all slots are the same. In this implementation, a quantity of PDCCH candidates in the USS is small.

In another possible implementation, if the CSS and the USS are configured in one slot, to ensure that a sum of a quantity of PDCCH candidates in the CSS and a quantity of PDCCH candidates in the USS does not exceed the BD upper-limit, the quantity of PDCCH candidates in the USS is small. In view of this, the network device may configure the USS in a slot in which no CSS is configured, and a quantity of PDCCH candidates in the USS does not exceed the BD upper-limit. A periodicity of the USS may be the same as or different from a periodicity of the CSS. This is not limited in embodiments of this application. In this implementation, there are some slots in which no USS is configured. Consequently, scheduling opportunities are reduced.

In still another possible implementation, the network device may configure the USS in each slot. In addition, in a slot in which the CSS is configured, a sum of a quantity of PDCCH candidates in the CSS and a quantity of PDCCH candidates in the USS does not exceed the BD upper-limit; and in a slot in which no CSS is configured, a quantity of PDCCH candidates in the USS does not exceed the BD upper-limit. In this implementation, there are some slots in which a quantity of PDCCH candidates of the USS is small.

To resolve a problem that a quantity of PDCCH candidates of the USS in a slot (in other words, in a time unit) is small, according to a stipulation in a protocol, when the network device performs configuration, a quantity of BDs or non-overlapping CCEs configured in some time units may be greater than an upper limit. In this case, a terminal device needs to select, according to the stipulation in the protocol, some PDCCH candidates in the time unit for monitoring, to ensure that a quantity of monitored BDs or non-overlapping CCEs is less than or equal to the upper limit.

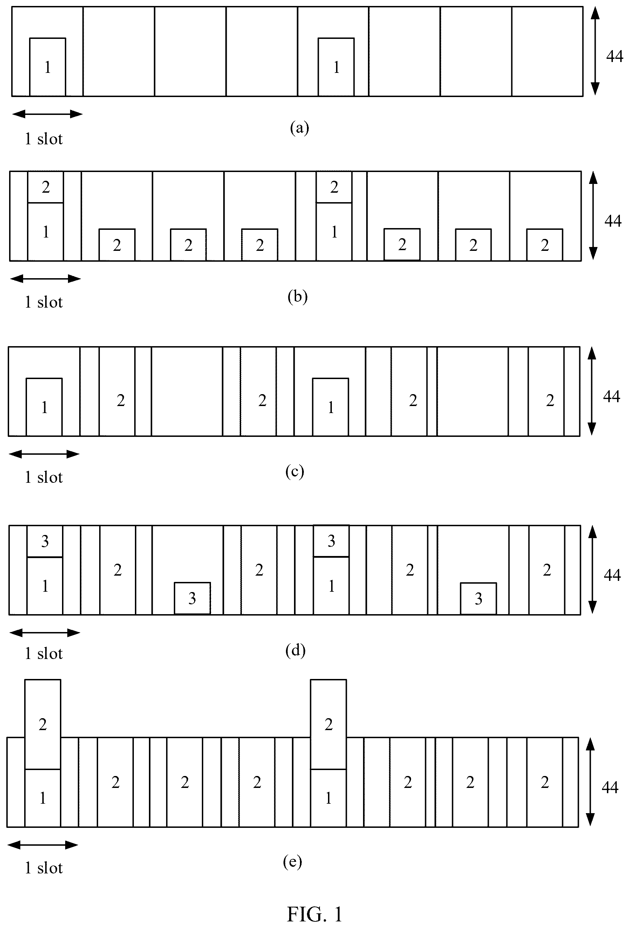

For example, it is assumed that the network device determines, according to the stipulation in the protocol, that a BD upper-limit of the primary cell in each slot is 44, the quantity of PDCCH candidates in the CSS does not exceed 44, and the periodicity of the CSS is 4 slots. (a) in FIG. 1 shows a configured CSS, and the CSS is marked as 1. On this basis, the network device may further configure a USS for terminal device space (UE-spec) scheduling of the primary cell. (b) in FIG. 1 shows an implementation. A periodicity of the USS is 1 slot, and the USS is marked as 2. In a slot in which the CSS is configured, a sum of a quantity of PDCCH candidates in the CSS and a quantity of PDCCH candidates in the USS does not exceed 44. The sum of the quantity of PDCCH candidates in the CSS and the quantity of PDCCH candidates in the USS may be 44, as shown in (b) in FIG. 1. (c) in FIG. 1 shows another implementation. The USS and the CSS are not in a same slot. A periodicity of the USS is 2 slots, and the USS is marked as 2. A quantity of PDCCH candidates in the USS does not exceed 44. The quantity of PDCCH candidates in the USS may be 44, as shown in (c) in FIG. 1. (d) in FIG. 1 shows still another implementation. A periodicity of the USS is 1 slot. In a slot in which the CSS is configured, the USS is marked as 3. In a slot in which no CSS is configured, the USS is marked as 2. In the slot in which the CSS is configured, a sum of a quantity of PDCCH candidates in the CSS and a quantity of PDCCH candidates in the USS does not exceed 44. In the slot in which no CSS is configured, a quantity of PDCCH candidates in the USS does not exceed 44. In the slot in which the CSS is configured, the sum of the quantity of PDCCH candidates in the CSS and the quantity of PDCCH candidates in the USS may be 44, as shown in (d) in FIG. 1. In the slot in which no CSS is configured, the quantity of PDCCH candidates in the USS may be 44, as shown in (d) in FIG. 1. (e) in FIG. 1 shows an implementation of overbooking. A periodicity of the USS is 1 slot, and the USS is marked as 2. In a slot in which the CSS is configured, a sum of a quantity of PDCCH candidates in the CSS and a quantity of PDCCH candidates in the USS may exceed 44. In a slot in which no CSS is configured, a quantity of PDCCH candidates in the USS does not exceed 44. The quantity of PDCCH candidates in the USS may be 44, as shown in (e) in FIG. 1.

### 9. Overbooking processing

A terminal device may subtract a quantity of PDCCH candidates associated with a CSS used for monitoring from an upper limit of a quantity of PDCCH candidates monitored in one time unit, and subtract a quantity of non-overlapping CCEs from an upper limit of a quantity of non-overlapping CCEs in one time unit, to obtain two remaining total quantities.

For a USS, a search space with a smaller index has a higher priority. The terminal device may respectively subtract, from the two remaining total quantities in ascending order of indexes, quantities of PDCCH candidates and non-overlapping CCEs that are associated with each search space used for monitoring. For a USS index, if two remaining total quantities obtained through subtraction are still greater than or equal to 0, a PDCCH candidate corresponding to the USS index may be monitored. For a USS index, if at least one of two remaining total quantities obtained through subtraction is less than 0, a PDCCH candidate corresponding to the USS index and a PDCCH candidate corresponding to a search space with an index greater than the USS index do not need to be monitored.

After the terminal device completes overbooking processing, a quantity of PDCCH candidates/non-overlapping CCEs, in a CSS on a primary cell and in a USS for scheduling the primary cell, that need to be monitored does not exceed a BD/CCE upper-limit.

A special type of CSS is an MBS-related CSS. This type of CSS is processed as a USS during pre-configuration.

### 10. Multi-cell scheduling DCI format

### 10.1 Scheduled cell set

Currently, two new DCI formats are discussed in a standard. The two DCI formats may be used to simultaneously schedule data transmission of two or more cells, and are referred to as multi-cell scheduling DCI formats. The two DCI formats and purposes thereof are shown in Table 1.

**Table 1**

| DCI format | Purpose |
|---|---|
| DCI format 0_3 | Schedule a PUSCH on an uplink carrier of one or more cells. |
| DCI format 1_3 | Schedule a PDSCH on a downlink carrier of one or more cells. |

As shown in Table 1, the multi-cell scheduling DCI format includes the DCI format 0_3 and the DCI format 1_3, the DCI format 0_3 is used to schedule a PUSCH on an uplink carrier of one or more cells, and the DCI format 1_3 is used to schedule a PDSCH on a downlink carrier of one or more cells.

It can be understood that the multi-cell scheduling DCI format can be used to simultaneously schedule uplink data transmission and/or downlink data transmission of the two or more cells. For example, the multi-cell scheduling DCI format can be used to simultaneously schedule data channels on downlink carriers of two or more cells. To be specific, one piece of DCI in the multi-cell scheduling DCI format simultaneously schedules at least one downlink data channel on each of downlink carriers of the two or more cells. Alternatively, for example, the multi-cell scheduling DCI format can be used to simultaneously schedule data channels on uplink carriers of two or more cells. To be specific, one piece of DCI in the multi-cell scheduling DCI format simultaneously schedules at least one uplink data channel on each of uplink carriers of the two or more cells. Alternatively, for example, the multi-cell scheduling DCI format can be used to simultaneously schedule uplink data channels and/or downlink data channels on carriers of two or more cells. To be specific, one piece of DCI in the multi-cell scheduling DCI format simultaneously schedules at least one data channel on each of carriers of two or more cells, where the data channel may be an uplink data channel or a downlink data channel. The downlink data channel may be a PDSCH, and the uplink data channel may be a PUSCH. Because a plurality of cells scheduled by the multi-cell scheduling DCI format may be configured with different carriers, the multi-cell scheduling DCI format is also referred to as a multi-carrier scheduling DCI format. If there is no logic conflict, the "cell" and the "carrier" in this application are interchangeable. For example, a "secondary carrier" is interchangeable with a "secondary cell", and a "scheduled carrier" is interchangeable with a "scheduled cell".

One terminal device may be configured with one or more scheduled cell sets, and multi-cell scheduling may be performed on a cell in each scheduled cell set by using the DCI format 0_3/1_3.

For example, one terminal device is configured with two scheduled cell sets, a first scheduled cell set includes a cell 0, a cell 1, a cell 2, and a cell 3, and a second scheduled cell set includes a cell 4, a cell 5, and a cell 6. A first multi-cell scheduling DCI format, for example, the DCI format 0_3, may simultaneously schedule one or more of the cell 0, the cell 1, the cell 2, and the cell 3. A second multi-cell scheduling DCI format, for example, the DCI format 1_3, may simultaneously schedule one or more of the cell 4, the cell 5, and the cell 6.

It should be noted that one piece of DCI whose DCI format is the multi-cell scheduling DCI format may schedule data transmission of a plurality of cells, but not all pieces of DCI whose DCI formats are the multi-cell scheduling DCI format simultaneously schedule data transmission of a plurality of cells. A multi-cell scheduling DCI format includes an indication field that indicates one or more scheduled cells scheduled by current DCI, and all of the one or more scheduled cells are cells in a scheduled cell set corresponding to the multi-cell scheduling DCI format. Because multi-cell scheduling is to schedule a plurality of carriers on a plurality of cells, the multi-cell scheduling DCI format is sometimes also referred to as a multi-carrier scheduling DCI format.

### 10.2 Reference cell

A network device configures a reference cell for a scheduled cell set that is configured to be scheduled by using a multi-cell scheduling DCI format. The reference cell meets the following conditions:
(1) The reference cell is a cell in the scheduled cell set.
(2) BDs and non-overlapping CCEs of the multi-cell scheduling DCI format are counted on the reference cell. For a reference cell, if a single-cell scheduling (legacy) DCI format for counting on the reference cell is configured, in a time unit, total BDs and total non-overlapping CCEs of the single-cell scheduling DCI format and the multi-cell scheduling DCI format do not exceed a BD upper-limit and a CCE upper-limit of the reference cell. One piece of DCI whose DCI format is the single-cell scheduling DCI format may be used to schedule data transmission of a maximum of one cell.

The reference cell is determined by the network device, and the network device may configure the reference cell for a terminal device in the following manners:
(1) If a primary scheduling cell of the multi-cell scheduling DCI format is included in the scheduled cell set and a search space of the multi-cell scheduling DCI format is configured only on the primary scheduling cell, the primary scheduling cell is the reference cell.
(2) If a search space set of the multi-cell scheduling DCI format is configured on two cells, where one is a primary scheduling cell, and the other is a scheduled cell in the scheduled cell set, and a sequence number of a search space set of the multi-cell scheduling DCI format that is configured on the primary scheduling cell is the same as a sequence number of a search space set configured on the scheduled cell, the scheduled cell is the reference cell of the multi-cell scheduling DCI format.

If one terminal device is configured with a plurality of scheduled cell sets, reference cells of different scheduled cell sets are independently configured. For one scheduled cell set, a reference cell of uplink multi-cell scheduling DCI and a reference cell of downlink multi-cell scheduling DCI are a same cell.

Currently, during self-scheduling of a primary cell, a network device may perform overbooking on a USS of the primary cell. To be specific, a sum of quantities of PDCCH candidates included in a USS and a CSS that are allocated by the network device to the primary cell or a sum of quantities of non-overlapping CCEs included in the USS and the CSS may exceed a corresponding upper limit.

With development of communication technologies, a multi-cell scheduling DCI format is newly added, and DCI in the format may be used for multi-cell scheduling.

After the multi-cell scheduling DCI format is introduced, how to perform overbooking for a primary cell becomes a problem that urgently needs to be resolved.

The applicant studies this and finds that, when a scheduled cell set is scheduled by using a multi-cell scheduling DCI format, if a primary cell is a reference cell, both BDs and CCEs in a USS of a DCI format 0_3/1_3 are counted based on a blind detection capability of the primary cell. To be specific, a sum of a quantity of PDCCH candidates in the USS and a quantity of PDCCH candidates in a CSS does not exceed a BD upper-limit, and/or a sum of a quantity of non-overlapping CCEs in the USS and a quantity of non-overlapping CCEs in the CSS does not exceed a CCE upper-limit. Because the quantity of PDCCH candidates and/or the quantity of non-overlapping CCEs in the CSS are/is preconfigured, under this constraint condition, the quantity of PDCCH candidates in the USS and/or the quantity of non-overlapping CCEs in the USS are/is small, to be specific, does not exceed the BD upper-limit minus the quantity of PDCCH candidates in the CSS, and/or does not exceed the CCE upper-limit minus the quantity of non-overlapping CCEs in the CSS.

In view of this, embodiments of this application provide a communication method and a communication apparatus. When a primary cell is a primary scheduling cell and the primary cell is a reference cell, overbooking may be performed for a USS. When a primary cell is a primary scheduling cell and the primary cell is not a reference cell, overbooking may not be performed for a USS. This helps improve flexibility of USS configuration.

For ease of understanding the method provided in embodiments of this application, the following descriptions are first provided.

First, in embodiments of this application, "indicate" may include a direct indication and an indirect indication, or may include an explicit indication and an implicit indication. Information indicated by specific information is referred to as to-be-indicated information. During specific implementation, the to-be-indicated information may be indicated in a plurality of manners, for example, but not limited to, a manner of directly indicating the to-be-indicated information, for example, indicating the to-be-indicated information or an index of the to-be-indicated information. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed upon. For example, the to-be-indicated information may alternatively be indicated by a pre-agreement (for example, a stipulation in a protocol) on whether an information element exists, to reduce indication overheads to some extent.

Second, in embodiments of this application, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. The character "/" usually indicates an "or" relationship between the associated objects. "At least one of the following items (pieces)" or a similar expression thereof indicates any combination of the items, including one of the items (pieces) or any combination of a plurality of the items (pieces). For example, at least one of a, b, and c may indicate a, b, c, a and b, a and c, b and c, or a, b, and c, where a, b, and c may be in a singular form or a plural form.

Third, in embodiments of this application, the descriptions "when...", "in a case that...", "if", and the like all mean that a device (for example, a terminal device or an access network device in the following descriptions) performs corresponding processing in an objective case, and are not intended to limit time. The descriptions do not necessarily mean that the device (for example, the terminal device or the access network device in the following descriptions) performs a determining action during implementation, and do not mean any other limitation.

Fourth, in embodiments of this application, "predefined" may mean being defined in a protocol. "Predefining" may be implemented by prestoring corresponding code or a corresponding table on a device (for example, including a terminal device and a network device), or may be implemented in another manner of indicating related information. A specific implementation of the "predefining" is not limited in this application.

Fifth, a "protocol" in embodiments of this application may be a standard protocol in the communication field, for example, may include a long term evolution (long term evolution, LTE) protocol, an NR protocol, and a related protocol applied to a future communication system. This is not limited in this application.

For ease of understanding the method provided in embodiments of this application, a communication system to which embodiments of this application are applicable is first described.

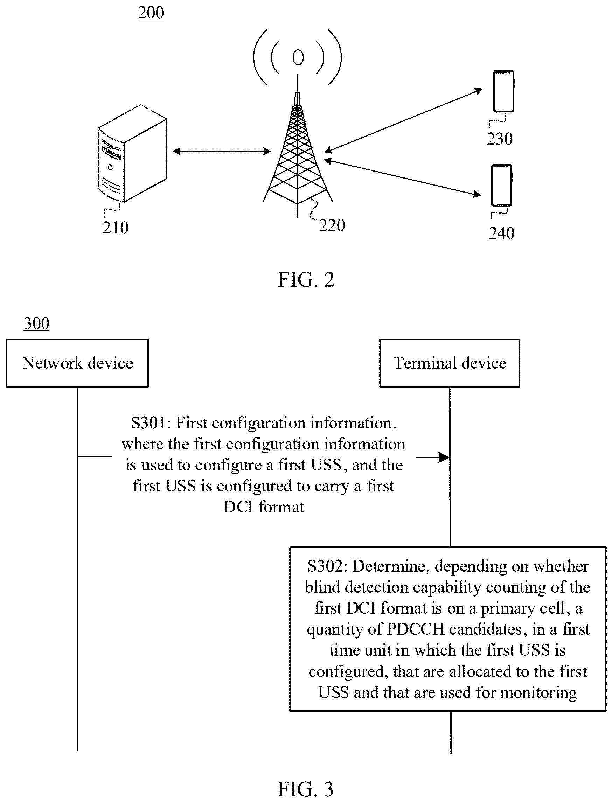

FIG. 2 is a diagram of a mobile communication system 200 to which embodiments of this application are applicable. As shown in FIG. 2, the mobile communication system 200 includes a core network device 210, a radio access network device 220, a terminal device 230, and a terminal device 240. The core network device 210 is optional. This is not limited in this embodiment of this application. The mobile communication system 200 may include at least one terminal device. The terminal device 230 and the terminal device 240 shown in FIG. 2 are merely an example. This is not limited in this embodiment of this application.

In the mobile communication system 200, the terminal device 230 or the terminal device 240 may be connected to the radio access network device 220 in a wireless manner, and the radio access network device 220 may be connected to the core network device 210 in a wireless or wired manner. The core network device 210 and the radio access network device 220 may be different independent physical devices, or functions of the core network device 210 and logical functions of the radio access network device 220 are integrated into a same physical device, or some functions of the core network device 210 and some functions of the radio access network device 220 are integrated into one physical device. The terminal device 230 or the terminal device 240 may be at a fixed location, or may be movable. This is not limited in this embodiment of this application. It should be noted that FIG. 2 is merely a diagram. The mobile communication system 200 may further include other network devices, for example, may further include a wireless relay device and a wireless backhaul device that are not shown in FIG. 2. Quantities of core network devices 210, radio access network devices 220, and terminal devices that are included in the mobile communication system 200 are not limited in this embodiment of this application.

The radio access network device 220 is an access device used by the terminal device 230 or the terminal device 240 to access the mobile communication system 200 in a wireless manner, and may be a NodeB (NodeB), an evolved NodeB (eNodeB), a base station in an NR mobile communication system, a base station in a future mobile communication system, an access node in a Wi-Fi system, or the like. A specific technology and a specific device form that are used for the radio access network device are not limited in this embodiment of this application.

The terminal device 230 or the terminal device 240 may also be referred to as a terminal (Terminal), user equipment (user equipment, UE), a mobile station (mobile station, MS), a mobile terminal (mobile terminal, MT), or the like. The terminal device may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The radio access network device 220, the terminal device 230, and the terminal device 240 may be deployed on land, including an indoor or outdoor scenario and a handheld or vehicle-mounted scenario; or may be deployed on water; or may be deployed on an airplane, a balloon, and a satellite in the air. An application scenario of the radio access network device 220, the terminal device 230, and the terminal device 240 is not limited in this embodiment of this application.

Embodiments of this application are applicable to downlink signal transmission, are also applicable to uplink signal transmission, and are further applicable to device-to-device (device-to-device, D2D) signal transmission. For the downlink signal transmission, a sending device is the radio access network device 220, and a corresponding receiving device is the terminal device 230 or the terminal device 240. For the uplink signal transmission, a sending device is the terminal device 230 or the terminal device 240, and a corresponding receiving device is the radio access network device 220. For the D2D signal transmission, a sending device may be the terminal device 230, and a corresponding receiving device may be the terminal device 240; or a sending device may be the terminal device 240, and a corresponding receiving device may be the terminal device 230. A signal transmission direction is not limited in this embodiment of this application.

Communication between the radio access network device 220 and the terminal device (the terminal device 230 or the terminal device 240) and between the terminal device 230 and the terminal device 240 may be performed by using a licensed spectrum (licensed spectrum), or may be performed by using an unlicensed spectrum (unlicensed spectrum), or may be performed by using both a licensed spectrum and an unlicensed spectrum. Communication between the radio access network device 220 and the terminal device (the terminal device 230 or the terminal device 240) and between the terminal device 230 and the terminal device 240 may be performed by using a spectrum below 6G, or may be performed by using a spectrum above 6G, or may be performed by using both a spectrum below 6G and a spectrum above 6G. A spectrum resource used between the radio access network device 220 and the terminal device (the terminal device 230 or the terminal device 240) is not limited in this embodiment of this application.

FIG. 3 is a schematic flowchart of a communication method 300 according to an embodiment of this application. The method 300 is applicable to the communication system shown in FIG. 2. However, this is not limited in this embodiment of this application. As shown in FIG. 3, the method 300 may include the following steps.

S301: A network device sends first configuration information to a terminal device, and correspondingly, the terminal device receives the first configuration information, where the first configuration information is used to configure a first USS, the first USS is configured to carry a first DCI format, and the first DCI format is a multi-cell scheduling DCI format.

If the first DCI format is the multi-cell scheduling DCI format, the first DCI format may be a DCI format 0_3 or a DCI format 1_3. The first DCI format may be a multi-cell scheduling DCI format corresponding to a first blind detection cell set. The first USS is configured to carry the first DCI format, and may also be referred to as a USS of the first DCI format. This is not limited in this embodiment of this application. A primary scheduling cell of the first DCI format may be a primary cell. The network device configures first DCI for the terminal device by using the first USS, to indicate the terminal device to monitor the first DCI.

S302: The terminal device determines, depending on whether blind detection capability counting of the first DCI format is on the primary cell, a quantity of physical downlink control channel PDCCH candidates, in a first time unit in which the first USS is configured, that are allocated to the first USS and that are used for monitoring.

A cell for the blind detection capability counting of the first DCI format may also be referred to as a blind detection capability reference cell of the first DCI format or a reference cell of the first DCI format. Whether the blind detection capability counting of the first DCI format is on the primary cell may be understood as whether the blind detection capability reference cell of the first DCI format is the primary cell. The first time unit in which the first USS is configured may represent one time unit in which the first USS is configured. In this application, one time unit in which the first USS is configured, that is, the first time unit, is used as an example for description. The time unit in which the first USS is configured includes at least one first time unit. To be specific, there may be another time unit that is the same as the first time unit. Details are not repeatedly described. Optionally, the first time unit is several consecutive orthogonal frequency division multiplexing OFDM symbols. Specifically, the time unit may be a slot or a time span.

Whether the blind detection capability counting of the first DCI format is on the primary cell may be determined by the network device. The network device in this embodiment of this application may be a device for communicating with the terminal device, and the network device may also be referred to as an access network device or a radio access network device. For example, in the scenario shown in FIG. 2, the network device may be the radio access network device 220. The terminal device may determine, based on an indication of the network device, to be specific, an indication that the blind detection capability counting of the first DCI format is on the primary cell or the blind detection capability counting of the first DCI format is not on the primary cell, the quantity of physical downlink control channel PDCCH candidates, in the first time unit in which the first USS is configured, that are allocated to the first USS and that are used for monitoring. The quantity of physical downlink control channel PDCCH candidates, in the first time unit in which the first USS is configured, that are allocated to the first USS and that are used for monitoring may be 0 or greater than 0. This is not limited in this embodiment of this application.

For example, if the blind detection capability counting of the first DCI format is on the primary cell, the quantity of PDCCH candidates, in the first time unit, that are allocated to the first USS and that are used for monitoring is 0; or if the blind detection capability counting of the first DCI format is on a cell other than the primary cell, in other words, is not on the primary cell, the quantity of PDCCH candidates, in the first time unit, that are allocated to the first USS and that are used for monitoring is greater than 0.

S302 may also be understood as follows: The terminal device determines, depending on whether the blind detection capability counting of the first DCI format is on the primary cell, whether to perform overbooking processing in the first time unit.

For example, if the blind detection capability counting of the first DCI format is on the primary cell, the terminal device may perform overbooking processing in the first time unit; or if the blind detection capability counting of the first DCI format is on a cell other than the primary cell, in other words, is not on the primary cell, the terminal device may not perform overbooking processing in the first time unit.

According to the communication method provided in this embodiment of this application, the terminal device may determine, depending on whether the blind detection capability counting of the first DCI format is on the primary cell, the quantity of physical downlink control channel PDCCH candidates, in the first time unit in which the first USS is configured, that are allocated to the first USS and that are used for monitoring, and may determine to allocate different quantities of PDCCH candidates to the first USS in different cases, to facilitate flexible configuration of the first USS.

Whether the blind detection capability counting of the first DCI format is on the primary cell may be determined by the network device.

In an example, the network device may determine that the blind detection capability counting of the first DCI format is on the primary cell, in other words, the network device determines that the primary cell is a cell for the blind detection capability counting of the first DCI format. In the first time unit in which the first USS is configured, a sum of quantities of PDCCH candidates in all configured search spaces whose blind detection counting is on the primary cell is greater than a BD upper-limit, or a sum of quantities of non-overlapping CCEs in all configured search spaces whose non-overlapping CCE counting is on the primary cell is greater than a CCE upper-limit.

A cell for the blind detection capability counting of the first DCI format may also be referred to as a blind detection capability reference cell of the first DCI format or a reference cell of the first DCI format. This is not limited in this embodiment of this application. The primary cell is a cell for the blind detection capability counting of the first DCI format, that is, the primary cell is a reference cell. If the primary cell is a reference cell and the primary scheduling cell is the primary cell, BDs and non-overlapping CCEs of the multi-cell scheduling DCI format are counted on the reference cell. Therefore, the BDs and the non-overlapping CCEs of the multi-cell scheduling DCI format are counted on the primary cell.

Blind detection counting or non-overlapping CCE counting of all search spaces configured by the network device is not necessarily performed on the primary cell. In other words, the search spaces configured by the network device include: a search space whose blind detection counting or non-overlapping CCE counting is performed on the primary cell, and a search space whose blind detection counting or non-overlapping CCE counting is not performed on the primary cell. In the first time unit in which the first USS is configured, the sum of the quantities of PDCCH candidates in all the search spaces whose blind detection counting is performed on the primary cell is greater than the BD upper-limit. Alternatively, in the first time unit in which the first USS is configured, the sum of the quantities of non-overlapping CCEs in all the configured search spaces whose non-overlapping CCE counting is on the primary cell is greater than the CCE upper-limit. All the search spaces are search spaces whose blind detection counting or non-overlapping CCE counting is performed on the primary cell. The search space may include a search space in a CSS, or may include a search space in a USS.

For example, in the first time unit in which the first USS is configured, the network device configures, for the primary cell, a CSS, a USS for scheduling the primary cell through single-cell scheduling (legacy) (which may be referred to as a second USS), and the first USS, and blind detection counting of all these search space sets is performed on the primary cell. In this case, a sum of quantities of PDCCH candidates in the CSS, the second USS, and the first USS is greater than the BD upper-limit; or a sum of quantities of non-overlapping CCEs in the CSS, the second USS, and the first USS is greater than the CCE upper-limit.

In the first time unit in which the first USS is configured, the sum of the quantities of PDCCH candidates in all the configured search spaces whose blind detection counting is on the primary cell is greater than the BD upper-limit, or the sum of the quantities of non-overlapping CCEs in all the configured search spaces whose non-overlapping CCE counting is on the primary cell is greater than the CCE upper-limit. In other words, the network device performs overbooking in the first time unit. This may also be understood as that the network device performs overbooking for the first DCI format on the primary cell.

The network device performs overbooking for the first DCI format on the primary cell, and the terminal device may determine that the quantity of physical downlink control channel PDCCH candidates, in the first time unit in which the first USS is configured, that are allocated to the first USS and that are used for monitoring is 0.

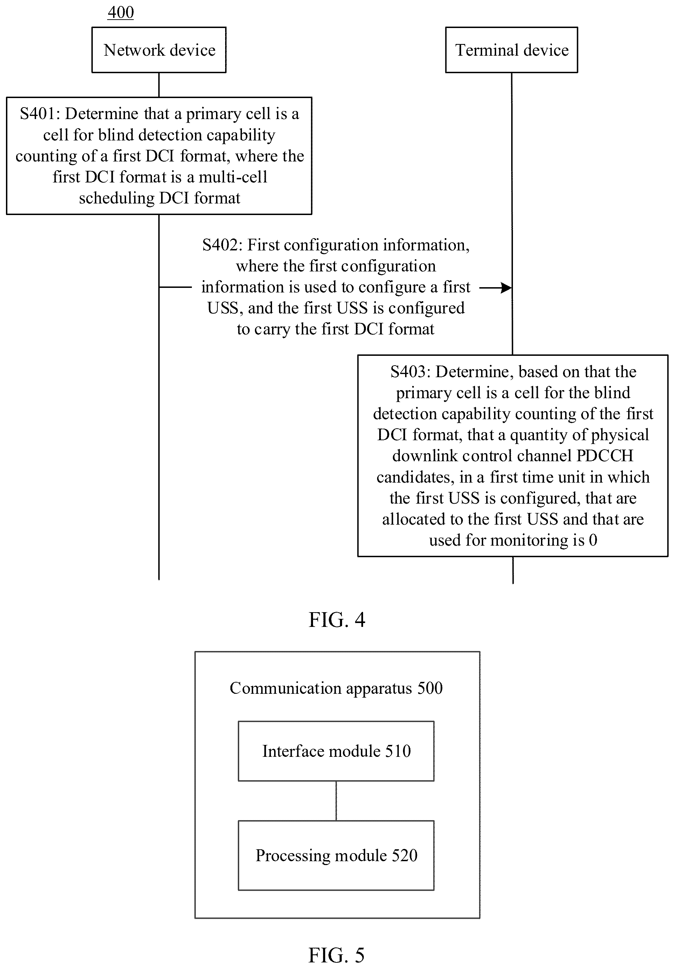

For example, FIG. 4 is a schematic flowchart of a communication method 400. As shown in FIG. 4, the method 400 may include the following steps.

S401: A network device determines that a primary cell is a cell for blind detection capability counting of a first DCI format, where the first DCI format is a multi-cell scheduling DCI format.

The primary cell is a cell for the blind detection capability counting of the first DCI format. In other words, in the multi-cell scheduling DCI format, the primary cell is a reference cell. BDs and non-overlapping CCEs of the first DCI format are counted on the reference cell. Therefore, the BDs and the non-overlapping CCEs of the first DCI format are counted on the primary cell. The primary cell is configured with a CSS. If a sum of quantities of PDCCH candidates in the CSS and a USS is less than or equal to a BD upper-limit, a quantity of PDCCH candidates is small; or if a sum of quantities of non-overlapping CCEs in the CSS and a USS is less than or equal to a CCE upper-limit, a quantity of non-overlapping CCEs is small. Therefore, the network device may perform overbooking. To be specific, in a first time unit in which a first USS is configured, a sum of quantities of PDCCH candidates in all configured search spaces whose blind detection counting is on the primary cell is greater than the BD upper-limit, or a sum of quantities of non-overlapping CCEs in all configured search spaces whose non-overlapping CCE counting is on the primary cell is greater than the CCE upper-limit.

S402: The network device sends first configuration information to a terminal device, and correspondingly, the terminal device receives the first configuration information, where the first configuration information is used to configure the first USS, and the first USS is configured to carry the first DCI format.

A sequence of performing S401 and S402 is not limited in this embodiment of this application. To be specific, the network device may perform S401 before S402, or may perform S402 before S401, or may simultaneously perform S401 and S402.

S403: The terminal device determines, based on that the primary cell is a cell for the blind detection capability counting of the first DCI format, that a quantity of physical downlink control channel PDCCH candidates, in the first time unit in which the first USS is configured, that are allocated to the first USS and that are used for monitoring is 0.

If the primary cell is a cell for the blind detection capability counting of the first DCI format, the terminal device may perform overbooking processing on the primary cell.

For example, the network device configures, for the primary cell, a CSS, a USS (which may be referred to as a second USS) for scheduling the primary cell through single-cell scheduling (legacy), and the first USS, blind detection counting of all these search space sets is performed on the primary cell, and the primary cell is a cell for the blind detection capability counting of the first DCI format. In this case, in the first time unit, the terminal device may perform overbooking processing for the first format on the primary cell. After overbooking processing is completed, in the first time unit, a sum of quantities of PDCCH candidates in the CSS, the second USS, and the first USS is less than or equal to the BD upper-limit; or a sum of quantities of non-overlapping CCEs in the CSS, the second USS, and the first USS is less than or equal to the CCE upper-limit.

In this implementation, if the primary cell is a cell for the blind detection capability counting of the first DCI format, the network device may perform overbooking processing for the first DCI format, and the terminal device may perform overbooking for the first DCI format. This helps avoid a problem that a quantity of PDCCH candidates or non-overlapping CCEs of a USS in the first time unit is small.

The foregoing example may also be understood as follows: If the blind detection capability counting of the first DCI format is on the primary cell, in the first time unit in which the first USS is configured, a sum of quantities of PDCCH candidates in a configured CSS whose blind detection counting is on the primary cell and in all configured USSs whose sequence numbers are less than a sequence number of the first USS is less than or equal to the BD upper-limit; or a sum of quantities of non-overlapping CCEs in a configured CSS whose non-overlapping CCE counting is on the primary cell and in all configured USSs whose sequence numbers are less than a sequence number of the first USS is less than or equal to the CCE upper-limit. In addition, in the first time unit in which the first USS is configured, a sum of quantities of PDCCH candidates in the configured CSS whose blind detection counting is on the primary cell and in all configured USSs whose sequence numbers are less than or equal to the sequence number of the first USS is greater than the BD upper-limit; or a sum of quantities of non-overlapping CCEs in the configured CSS whose non-overlapping CCE counting is on the primary cell and in all configured USSs whose sequence numbers are less than or equal to the sequence number of the first USS is greater than the CCE upper-limit.

If an MBS-related CSS is configured in the first time unit, in the first time unit in which the first USS is configured, a sum of quantities of PDCCH candidates in a configured CSS, other than the MBS-related CSS, whose blind detection counting is on the primary cell and in all the configured USSs whose sequence numbers are less than the sequence number of the first USS or in the MBS-related CSS is less than or equal to the BD upper-limit; or a sum of quantities of non-overlapping CCEs in a configured CSS, other than the MBS-related CSS, whose non-overlapping CCE counting is on the primary cell and in all the configured USSs whose sequence numbers are less than the sequence number of the first USS or in the MBS-related CSS is less than or equal to the CCE upper-limit. In addition, in the first time unit in which the first USS is configured, a sum of quantities of PDCCH candidates in the configured CSS, other than the MBS-related CSS, whose blind detection counting is on the primary cell and in all the configured USSs whose sequence numbers are less than or equal to the sequence number of the first USS or in the MBS-related CSS is greater than the BD upper-limit; or a sum of quantities of non-overlapping CCEs in the configured CSS, other than the MBS-related CSS, whose non-overlapping CCE counting is on the primary cell and in all the configured USSs whose sequence numbers are less than or equal to the sequence number of the first USS or in the MBS-related CSS is greater than the CCE upper-limit.

In another example, the network device may determine that the blind detection capability counting of the first DCI format is not on the primary cell, in other words, the network device determines that the primary cell is not a cell for the blind detection capability counting of the first DCI format. In the first time unit in which the first USS is configured, a sum of quantities of PDCCH candidates in all configured search spaces whose blind detection counting is on the primary cell is less than or equal to the BD upper-limit, or a sum of quantities of non-overlapping CCEs in all configured search spaces whose non-overlapping CCE counting is on the primary cell is less than or equal to the CCE upper-limit.

After receiving the first configuration information, the terminal device may determine that a quantity of physical downlink control channel PDCCH candidates, in the first time unit in which the first USS is configured, that are allocated to the first USS and that are used for monitoring is greater than 0.

The primary cell may be set as a reference cell in a plurality of scheduled cell sets. In other words, the primary cell may be a cell for a plurality of pieces of blind detection capability counting of the first DCI format. If a quantity of the plurality of scheduled cell sets is excessively large, overbooking of the network device is complex, and overbooking processing of the terminal device is also complex. Therefore, the quantity of the plurality of scheduled cell sets may be further limited in this embodiment of this application.

In an example, the primary cell may be a reference cell in a maximum of K scheduled cell sets, where K is equal to 1 or 2, and the scheduled cell set is a scheduled cell set corresponding to the multi-cell scheduling DCI format. In other words, the primary cell may be a cell for blind detection capability counting of a maximum of K scheduled cell sets.

The primary cell is a primary scheduling cell, and the primary cell is a reference cell. The primary cell may be a reference cell in a maximum of one or two scheduled cell sets. In other words, there is at least one scheduled cell set in which a reference cell in not the primary cell. This helps reduce complexity of overbooking processing of the network device and complexity of overbooking of the terminal device, and can alleviate a limited blind detection capability on the primary cell.

In another example, if the primary cell is not configured with a USS carrying a second DCI format used for self-scheduling, the primary cell is a reference cell in a maximum of M scheduled cell sets (in other words, the primary cell is a cell for blind detection capability counting of a maximum of M scheduled cell sets of the first DCI format), and the scheduled cell set is a scheduled cell set corresponding to the multi-cell scheduling DCI format; or if the primary cell is configured with a USS carrying a second DCI format used for self-scheduling, the primary cell is a reference cell in a maximum of N scheduled cell sets (in other words, the primary cell is a cell for blind detection capability counting of a maximum of N scheduled cell sets of the first DCI format), where the second DCI format is a single-cell scheduling DCI format, and M is greater than N, or M=N+1.

Specific values of M and N may be preset in a protocol. This is not limited in this embodiment of this application.

That the primary cell is not configured with a USS carrying the second DCI format used for self-scheduling may be referred to as that the primary cell is not configured with a self-scheduling USS. That the primary cell is configured with a USS carrying the second DCI format used for self-scheduling may be referred to as that the primary cell is configured with a self-scheduling USS.

The primary cell is the primary scheduling cell, and the primary cell is a reference cell. Compared with a scenario in which the primary cell is not configured with a self-scheduling USS, in a scenario in which the primary cell is configured with a self-scheduling USS, the primary cell may be a reference cell in more scheduled cell sets. In other words, if the primary cell is configured with a self-scheduling USS, complexity of overbooking processing of the network device and complexity of overbooking of the terminal device are increased. Therefore, in this scenario, cases in which the primary cell is a reference cell in a scheduled cell set are reduced. This helps reduce complexity of overbooking of the network device and complexity of overbooking processing of the terminal device.

In embodiments of this application, unless otherwise specified or a logic conflict occurs, terms and/or descriptions in different embodiments are consistent and may be mutually referenced, and technical features in different embodiments may be combined into a new embodiment based on an internal logical relationship between the technical features.

Sequence numbers of the foregoing processes do not mean an execution sequence. The execution sequence of the processes should be determined based on functions and internal logic of the processes, and should not be construed as any limitation on implementation processes of embodiments of this application.

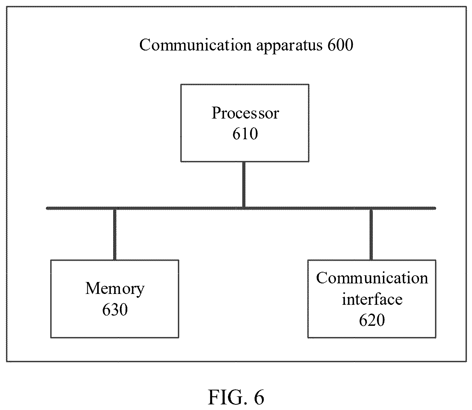

The foregoing describes in detail the method in embodiments of this application with reference to FIG. 1 to FIG. 4. The following describes in detail an apparatus in embodiments of this application with reference to FIG. 5 and FIG. 6.

FIG. 5 is a block diagram of a communication apparatus 500 according to an embodiment of this application. As shown in FIG. 5, the communication apparatus 500 may include an interface module 510 and a processing module 520.

In a possible implementation, the communication apparatus 500 may perform the steps performed by the terminal device in the foregoing embodiments.

The interface module 510 is configured to receive first configuration information, where the first configuration information is used to configure a first user equipment-specific search space USS, the first USS is configured to carry a first downlink control information DCI format, and the first DCI format is a multi-cell scheduling DCI format. The processing module 520 is configured to determine, depending on whether blind detection capability counting of the first DCI format is on a primary cell, a quantity of physical downlink control channel PDCCH candidates, in a first time unit in which the first USS is configured, that are allocated to the first USS and that are used for monitoring.

In another possible implementation, the communication apparatus 500 may perform the steps performed by the network device in the foregoing embodiments.

The processing module 520 is configured to determine that a primary cell is a cell for blind detection capability counting of a first downlink control information DCI format, where the first DCI format is a multi-cell scheduling DCI format. The interface module 510 is configured to send first configuration information, where the first configuration information is used to configure a first user equipment-specific search space USS, and the first USS is configured to carry the first DCI format. In a first time unit in which the first USS is configured, a sum of quantities of PDCCH candidates in all configured search spaces whose blind detection counting is on the primary cell is greater than a BD upper-limit, or a sum of quantities of non-overlapping CCEs in all configured search spaces whose non-overlapping CCE counting is on the primary cell is greater than a CCE upper-limit.

It should be understood that the communication apparatus 500 herein is embodied in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the communication apparatus 500 may be specifically the terminal device or the network device in the foregoing embodiments, and the communication apparatus 500 may be configured to perform the processes and/or the steps corresponding to the terminal device or the network device in the foregoing method embodiments. To avoid repetition, details are not described herein again.

The communication apparatus 500 in the foregoing solutions has a function of implementing corresponding steps performed by the terminal device or the network device in the foregoing methods. The function may be implemented by hardware, or may be implemented by hardware executing corresponding software. The hardware or the software includes one or more modules corresponding to the function.

In this embodiment of this application, the communication apparatus 500 in FIG. 5 may alternatively be a chip or a chip system, for example, a system-on-a-chip (system-on-a-chip, SoC).

FIG. 6 is a block diagram of another communication apparatus 600 according to an embodiment of this application. As shown in FIG. 6, the communication apparatus 600 includes a processor 610, a communication interface 620, and a memory 630. The processor 610, the communication interface 620, and the memory 630 communicate with each other through an internal connection path. The memory 630 is configured to store instructions. The communication interface 620 has an input/output function or a transceiver function, and is configured to communicate with another device through a transmission medium, so that the communication apparatus 600 can communicate with the another device. The processor 610 is configured to execute the instructions stored in the memory 630, to control the communication interface 620 to send a signal and/or receive a signal.

It should be understood that the communication apparatus 600 may be specifically the terminal device or the network device in the foregoing embodiments, and may be configured to perform the steps and/or the processes corresponding to the terminal device or the network device in the foregoing method embodiments. Optionally, the memory 630 may include a read-only memory and a random access memory, and provide instructions and data for the processor. A part of the memory may further include a non-volatile random access memory. For example, the memory may further store information about a device type. The processor 610 may be configured to execute the instructions stored in the memory, and when the processor 610 executes the instructions stored in the memory, the processor 610 is configured to perform the steps and/or the processes in the method embodiments corresponding to the terminal device or the network device. The communication interface 620 may include a transmitter and a receiver. The transmitter may be configured to implement steps and/or processes that correspond to the communication interface 620 and that are used to perform a sending action. The receiver may be configured to implement steps and/or processes that correspond to the communication interface 620 and that are used to perform a receiving action.

It should be understood that, in this embodiment of this application, the processor of the foregoing apparatus may be a central processing unit (central processing unit, CPU), or the processor may be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

During implementation, the steps of the foregoing methods may be performed by a hardware integrated logic circuit in the processor or by using instructions in a form of software. The steps of the methods disclosed with reference to embodiments of this application may be directly performed by a hardware processor, or may be performed by a combination of hardware and software units in the processor. The software unit may be located in a mature storage medium in the art, for example, a random access memory, a flash memory, a read-only memory, a programmable read-only memory, an electrically erasable programmable memory, or a register. The storage medium is located in a memory, and the processor reads instructions in the memory and performs the steps of the foregoing methods based on hardware of the processor. To avoid repetition, details are not described herein again.

An embodiment of this application further provides a communication system. The communication system may include the terminal device and the network device in the foregoing embodiments.

An embodiment of this application provides a computer-readable storage medium. The computer-readable storage medium is configured to store a computer program. The computer program is used to implement the method corresponding to the terminal device in various possible implementations in the foregoing embodiments.

An embodiment of this application provides another computer-readable storage medium. The computer-readable storage medium is configured to store a computer program. The computer program is used to implement the method corresponding to the network device in various possible implementations in the foregoing embodiments.

An embodiment of this application provides a computer program product. The computer program product includes a computer program (which may also be referred to as code or instructions). When the computer program is run on a computer, the computer may perform the method corresponding to the terminal device in the foregoing embodiments.

An embodiment of this application provides another computer program product. The computer program product includes a computer program (which may also be referred to as code or instructions). When the computer program is run on a computer, the computer may perform the method corresponding to the network device in various possible implementations in the foregoing embodiments.

An embodiment of this application provides a chip system. The chip system is configured to support the foregoing terminal device in implementing the functions shown in embodiments of this application.

An embodiment of this application provides another chip system. The chip system is configured to support the foregoing network device in implementing the functions shown in embodiments of this application.

A person of ordinary skill in the art may be aware that units and algorithm steps in examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application. However, it should not be considered that the implementation goes beyond the scope of this application.

It can be clearly understood by a person skilled in the art that, for ease and brevity of description, for detailed working processes of the foregoing systems, apparatuses, and units, reference may be made to corresponding processes in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separated, and components shown as units may or may not be physical units, to be specific, may be located in one place, or may be distributed on a plurality of network units. Some or all of the units may be selected according to actual requirements to achieve the objectives of the solutions of embodiments.

In addition, functional units in embodiments of this application may be integrated into one processing unit, or each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a receive end, or the like) to perform all or some of the steps of the methods in embodiments of this application. The storage medium includes any medium that can store program code, for example, a USB flash drive, a removable hard disk drive, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving first configuration information, wherein the first configuration information is used to configure a first user equipment-specific search space USS, the first USS is configured to carry a first downlink control information DCI format, and the first DCI format is a multi-cell scheduling DCI format; and
determining, depending on whether blind detection capability counting of the first DCI format is on a primary cell, a quantity of physical downlink control channel PDCCH candidates, in a first time unit in which the first USS is configured, that are allocated to the first USS and that are used for monitoring.

2. The method according to claim 1, wherein determining, depending on whether the blind detection capability counting of the first DCI format is on the primary cell, the quantity of physical downlink control channel PDCCH candidates, in the first time unit in which the first USS is configured, that are allocated to the first USS and that are used for monitoring comprises:
when the blind detection capability counting of the first DCI format is on the primary cell, determining that the quantity of PDCCH candidates, in the first time unit, that are allocated to the first USS and that are used for monitoring is 0, wherein
in the first time unit, a sum of quantities of PDCCH candidates in all configured search spaces whose blind detection counting is on the primary cell is greater than a blind detection BD upper-limit, or a sum of quantities of non-overlapping control channel elements CCEs in all configured search spaces whose non-overlapping CCE counting is on the primary cell is greater than a CCE upper-limit.

3. The method according to claim 1 or 2, wherein determining, depending on whether the blind detection capability counting of the first DCI format is on the primary cell, the quantity of physical downlink control channel PDCCH candidates, in the first time unit in which the first USS is configured, that are allocated to the first USS and that are used for monitoring comprises:
when the blind detection capability counting of the first DCI format is on a cell other than the primary cell, determining that the quantity of PDCCH candidates, in the first time unit, that are allocated to the first USS and that are used for monitoring is greater than 0.

4. The method according to any one of claims 1 to 3, wherein the primary cell is a cell for blind detection capability counting of a maximum of K scheduled cell sets of the first DCI format, and K is equal to 1 or 2.

5. The method according to any one of claims 1 to 3, wherein if the primary cell is not configured with a USS carrying a second DCI format used for self-scheduling, the primary cell is a cell for blind detection capability counting of a maximum of M scheduled cell sets of the first DCI format, and the second DCI format is a single-cell scheduling DCI format; or
if the primary cell is configured with a USS carrying a second DCI format used for self-scheduling, the primary cell is a cell for blind detection capability counting of a maximum of N scheduled cell sets of the first DCI format, wherein
M is greater than N, or M=N+1.

6. The method according to any one of claims 1 to 5, wherein the first time unit is a slot or a time span.

7. A communication method, comprising:
determining that a primary cell is a cell for blind detection capability counting of a first downlink control information DCI format, wherein the first DCI format is a multi-cell scheduling DCI format; and
sending first configuration information, wherein the first configuration information is used to configure a first user equipment-specific search space USS, and the first USS is configured to carry the first DCI format, wherein
in a first time unit in which the first USS is configured, a sum of quantities of PDCCH candidates in all configured search spaces whose blind detection counting is on the primary cell is greater than a BD upper-limit, or a sum of quantities of non-overlapping CCEs in all configured search spaces whose non-overlapping CCE counting is on the primary cell is greater than a CCE upper-limit.

8. The method according to claim 7, wherein the primary cell is a cell for blind detection capability counting of a maximum of K scheduled cell sets of the first DCI format, and K is equal to 1 or 2.

9. The method according to claim 7, wherein if the primary cell is not configured with a USS carrying a second DCI format used for self-scheduling, the primary cell is a cell for blind detection capability counting of a maximum of M scheduled cell sets of the first DCI format, and the second DCI format is a single-cell scheduling DCI format; or
if the primary cell is configured with a USS carrying a second DCI format used for self-scheduling, the primary cell is a cell for blind detection capability counting of a maximum of N scheduled cell sets of the first DCI format, wherein
M is greater than N, or M=N+1.

10. The method according to any one of claims 7 to 9, wherein the first time unit is a slot or a time span.

11. A communication apparatus, comprising a module for performing the method according to any one of claims 1 to 6, or comprising a module for performing the method according to any one of claims 7 to 10.

12. A computer-readable storage medium, wherein the computer-readable storage medium stores a computer program, and when the computer program is run on a communication apparatus, the method according to any one of claims 1 to 6 is performed, or the method according to any one of claims 7 to 10 is performed.

13. A computer program product, wherein the computer program product comprises instructions, and when the instructions are executed, the method according to any one of claims 1 to 6 is performed, or the method according to any one of claims 7 to 10 is performed.
